# EUROPÄISCHE PATENTANMELDUNG

(11) **EP 4 272 557 A1**
(43) Veröffentlichungstag der Anmeldung: **08.11.2023**
(21) Anmeldenummer: 22171302.7
(22) Anmeldetag: 03.05.2022
(51) Int. Cl.: A21C 1/14, B65G 65/23

(54) **TRANSPORTVORRICHTUNG MIT HUB- UND FÖRDERVORRICHTUNG ZUM TRANSPORT VON NAHRUNGSMITTELTEIG**

(71) Anmelder: DIOSNA Dierks & Söhne GmbH, 49086 Osnabrück (DE)
(72) Erfinder: GHANI, Hashem, 49086 Osnabrück (DE)
(74) Vertreter: Lenzing Gerber Stute

(57) **Zusammenfassung**

Die Erfindung betrifft eine Transportvorrichtung (1) zum Transport von Nahrungsmittelteig in einem Bottich (3) eines Bottichwagens (2) aufweisend
- eine Hubvorrichtung (4), die dazu eingerichtet ist, den Bottichwagen (2) entlang einer Hubstrecke zwischen einer unteren Endlage und einer oberen Endlage zu transportieren,
- eine Fördervorrichtung (5), die dazu eingerichtet ist, den Bottichwagen (2) entlang einer Förderstrecke zwischen der oberen Endlage und einer Endposition zu transportieren,
- wenigstens eine Antriebsvorrichtung, die zum Antreiben der Hubvorrichtung (4) und/oder Fördervorrichtung (5) ausgebildet ist,
- eine Kippvorrichtung (32), die dazu ausgebildet ist, den Bottich (3) mit dem Bottichwagen (2) an wenigstens einer Position entlang der Förderstrecke zum Austrag des Nahrungsmittelteigs aus dem Bottich (3) gegenüber der Horizontalen um mehr als 100° zu verkippen, und
- eine Abdeckung, die unterhalb der Förderstrecke angeordnet ist und die dazu eingerichtet ist, einen Raum unterhalb der Fördervorrichtung (5) vor Verschmutzung durch die Fördervorrichtung (5) zu schützen.

## Beschreibung

Die vorliegende Erfindung betrifft eine Transportvorrichtung zum Transport von Nahrungsmittelteig in einem Bottich eines Bottichwagens mit den Merkmalen des Oberbegriffs des Anspruchs 1, eine Verwendung der Transportvorrichtung zum Transport von Nahrungsmittelteig sowie ein Verfahren zum Transport von Nahrungsmittelteig mittels der Transportvorrichtung.

Misch- und Knetmaschinen für Nahrungsmittelteige, insbesondere fermentierte Teige, wie etwa Brotteig, und kompakte Nahrungsmittelteige, wie beispielsweise Müslimassen und Riegelmassen, bestehen vorwiegend aus einem fahrbaren Bottich unterschiedlicher Größe für Teige von 120 bis 1000 Kg, in den jeweils ein motorisch antreibbares Misch- und Knetwerkzeug zur Durchführung des Misch- und Knetvorganges hineinragt. Nach Beendigung des Knetvorganges wird das Werkzeug ausgefahren und der Bottich zu einer Verarbeitungsanlage gefahren. Mit Hilfe eines Hebekippers wird der Bottich von einer Hebebühne des Hebekippers erfasst, auf die der Größe des Hebekippers entsprechenden Höhe gebracht und um mehr als 90° gekippt, so dass die im Bottich befindliche Masse in die darunter angeordnete Eingangsstation einer Bearbeitungsvorrichtung fällt, welche beispielsweise als ein Trichter ausgebildet sein kann. Ein solcher Hebekipper geht beispielsweise aus der DE 19 40 501 U1 und der DE 42 09 689 C2 hervor.

Aus Platzgründen kann es notwendig sein, dass die Eingangsstation der Bearbeitungsvorrichtung in einem großen horizontalen Abstand zu dem Hebekipper liegt. Um die Nahrungsmittelmasse von dem Hebekipper zu der Eingangsstation zu fördern, ist es bekannt Förderanlagen einzusetzen. Die Nahrungsmittelmasse wird mittels des Hebekippers auf die der Größe des Hebekippers entsprechenden Höhe gebracht und direkt auf den Obertrum eines Endlosförderbandes der Förderanlage gekippt und zu der Eingangsstation transportiert, wo die Nahrungsmittelmasse beim Umlaufen des Förderbandes von dem Förderband in die Eingangsstation fällt bzw. fließt. Dadurch, dass die Förderanlange etwa auf Kipphöhe des Hebekippers liegt, ist unterhalb der Förderanlage Platz für Geh -und/oder Fahrwege oder Verarbeitungs- und/oder Förderstraßen.

Es ist Aufgabe der vorliegenden Erfindung eine Alternative für die Beförderung von Nahrungsmittelmassen zu einer entfernt und erhöht liegenden Eingangsstation aufzuzeigen.

Diese Aufgabe wird von einer Transportvorrichtung mit den Merkmalen des Anspruchs 1, einer Verwendung der Transportvorrichtung mit den Merkmalen des Anspruchs 11, sowie einem Verfahren zum Transport von Nahrungsmittelmassen mittels der Transportvorrichtung mit den Merkmalen des Anspruchs 12 gelöst.

Demnach ist eine Transportvorrichtung zum Transport von Nahrungsmittelteig in einem Bottich eines Bottichwagens vorgesehen, die
- eine Hubvorrichtung, die dazu eingerichtet ist, den Bottichwagen entlang einer Hubstrecke zwischen einer unteren Endlage und einer oberen Endlage zu transportieren,
- eine Fördervorrichtung, die dazu eingerichtet ist, den Bottichwagen entlang einer Förderstrecke zwischen der oberen Endlage und einer Endposition zu transportieren,
- wenigstens eine Antriebsvorrichtung, die zum Antreiben der Hubvorrichtung und/oder Fördervorrichtung ausgebildet ist,
- eine Kippvorrichtung, die dazu ausgebildet ist, den Bottich mit dem Bottichwagen an wenigstens einer Position entlang der Förderstrecke zum Austrag des Nahrungsmittelteigs aus dem Bottich gegenüber der Horizontalen um mehr als 100° zu verkippen, insbesondere in einem Bereich zwischen 105° und 135°, und
- eine Abdeckung, die unterhalb der Förderstrecke angeordnet ist und die dazu eingerichtet ist, einen Raum unterhalb der Fördervorrichtung vor Verschmutzung durch die Fördervorrichtung zu schützen, aufweist.

Da die Fördervorrichtung dazu ausgebildet ist, den Bottichwagen bis zum Austrag an die gewünschte Position zu bewegen, kann der Nahrungsmittelteig unmittelbar aus dem Bottich in die anschließende Eingangsstation ausgetragen werden, wodurch sich große Vorteile ergeben.

Um den Austrag zu verbessern, ist es vorteilhaft, wenn der Bottich zur Drehung um eine Rotationsachse antreibbar ist. Zusätzlich kann eine Ausschälvorrichtung mit dem Bottichwagen entlang der Hubstrecke und der Förderstrecke bewegbar sein, die dazu ausgebildet ist, den Bottich restzuentleeren.

In einer bevorzugten Ausführungsform weist die Hubvorrichtung eine erste Antriebsvorrichtung auf und die Fördervorrichtung eine zweite Antriebsvorrichtung, die separat zur ersten Antriebsvorrichtung ausgebildet ist, wobei jede Antriebsvorrichtung einen eigenen Antriebsmotor aufweist.

Vorzugsweise haben die Antriebsvorrichtungen jeweils einen Zugmitteltrieb, bevorzugt einen Kettentrieb mit zwei parallelangeordneten umlaufenden endlos Rollenketten.

Es ist vorteilhaft, wenn die Hubvorrichtung zwei Hubsäulen und zwischen den Hubsäulen einen geführten Hubwagen aufweist, wobei der Hubwagen dazu ausgebildet ist eine Bühne zu transportieren, die lose auf dem Hubwagen aufliegt, und wobei die Bühne eine Befestigungsvorrichtung aufweist, die dazu ausgebildet ist, den Bottichwagen auf der Bühne zu fixieren, und wobei der Hubwagen ausschließlich zwischen der unteren Endlage und der oberen Endlage verfahrbar ist und der Bottichwagen dazu ausgebildet ist, mittels der Fördervorrichtung entlang der Förderstrecke zu verfahren.

Der Bottichwagen kann so aus der Hubvorrichtung an die Fördervorrichtung und vice versa übergeben werden.

Vorzugsweise weist der Hubwagen Seitenwangen auf, an dessen Außenseite jeweils eine fest mit der Rollenkette der Hubvorrichtung verbundene Laufrolle befestigt ist, die jeweils an einer Hubsäule abrollt. Die Bühne hat einen Boden und daran anschließende Seitenwangen, an dessen Außenseite jeweils eine Laufrolle befestigt ist, die dazu ausgebildet ist, von einem mit der entsprechenden Rollenkette der Fördervorrichtung verbunden Mitnehmer durch Formschluss erfasst zu werden. Diese mechanische Lösung ist besonders zuverlässig und kostengünstig.

Die Hubvorrichtung kann eine geneigte Hubstrecke zur Vertikalen ausbilden. Die Neigung gegenüber der Vertikalen ist bevorzugt kleiner als 10°. Vorzugsweise verläuft die Hubstrecke vertikal. Die Förderstrecke ist bevorzugt horizontal ausgerichtet. Es ist aber auch denkbar, dass die Förderstrecke zur Horizontalen um vorzugsweise kleiner als 10° geneigt ist.

In einer besonders günstigen Ausführungsform ist die Kippvorrichtung eine mechanische Kippkurve, die am Ende der Förderstrecke angeordnet ist.

Die Bühne trägt bevorzugt einen Elektromotor zum rotatorischen Antreiben des Bottichs und/oder die Ausschälvorrichtung.

Weiterhin ist eine Verwendung der vorhergehenden Transportvorrichtung zum Transport von Nahrungsmittelteig von einer Teigmisch- und Knetmaschine zu einer Eingangsstation einer Teigverarbeitungsanlage bzw. eine Teigverarbeitungsstation vorgesehen.

Außerdem ist ein Verfahren zum Transport von Nahrungsmittelteig mittels einer Transportvorrichtung aufweisend eine Hubvorrichtung und eine Fördervorrichtung vorgesehen, wobei das Verfahren folgende aufeinanderfolgende Schritte aufweist:
a) Fahren eines Bottichwagens in die Hubvorrichtung,
b) Transportieren des Bottichwagens mittels der Hubvorrichtung von einer unteren Endlage in eine obere Endlage,
c) Transportieren des Bottichwagens mittels der Fördervorrichtung von der oberen Endlage in eine Zwischenposition oder Endposition,
d) Verkippen des Bottichwagens gegenüber der Horizontalen um mehr als 100° und dadurch Austragen des Nahrungsmittelteigs aus einem Bottich des Bottichwagens.

Vorzugsweise wird im Verfahrensschritt d) der Bottich zum Austragen des Nahrungsmittelteiges gedreht.

Die Transportvorrichtung ist vorzugsweise, wie vorhergehend beschrieben, ausgebildet.

In einer vorteilhaften Ausführungsform weist die Hubvorrichtung eine erste Antriebsvorrichtung auf und die Fördervorrichtung eine zweite Antriebsvorrichtung, die separat zur ersten Antriebsvorrichtung ausgebildet ist, wobei jede Antriebsvorrichtung einen eigenen Antriebsmotor aufweist und zwischen den Verfahrensschritten b) und c) der Bottichwagen von der Hubvorrichtung freigegeben wird und in Formschluss mit der Fördervorrichtung gebracht wird. Dabei ist es vorteilhaft, wenn die erste und zweite Antriebsvorrichtung jeweils ein Kettentrieb mit zwei parallelangeordneten umlaufenden endlos Rollenketten ist und die Transportvorrichtung einen Hubwagen, der zwischen zwei Hubsäulen geführt ist, und eine Bühne aufweist, wobei im Verfahrensschritt b) die Bühne lose auf dem Hubwagen aufliegt und auf der Bühne der Bottichwagen steht und mit dem Hubwagen die Bühne und der Bottichwagen verfahren werden und im Verfahrensschritt c) die Bühne mit dem Bottichwagen transportiert wird und der Hubwagen zwischen den Hubsäulen verbleibt. Vorzugsweise hat die Bühne einen Boden und daran anschließende Seitenwangen, an dessen Außenseite jeweils eine Laufrolle befestigt ist, und in Verfahrensschritt b) die Bühne in die obere Endlage gebracht wird und dabei die Laufrolle in einen Mitnehmer eingreift, der mit der entsprechenden Rollenkette verbunden ist, so dass im Verfahrensschritt c) mittels des Mitnehmers die Bühne von dem Hubwagen runterbewegt und zur Zwischenposition oder Endposition transportiert wird.

Außerdem ist ein Verfahren zur Herstellung von Nahrungsmittelteig mit den folgenden aufeinanderfolgenden Verfahrensschritten vorgesehen:
- Kneten eines Nahrungsmittelteiges in einem Bottich eines Bottichwagens mittels einer Knetmaschine,
- Nach Beendigung des Knetvorgangs Herausfahren eines Knetwerkzeugs der Knetmaschine aus dem Bottich und Entnahme des Bottichwagens aus der Knetmaschine,
- Verfahren des Bottichwagens zu einer Transportvorrichtung und Ausführen des vorhergehend beschriebenen Verfahrens.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1 bis 5:: fünf räumliche Darstellungen einer Transportvorrichtung mit Hubvorrichtung und Fördervorrichtung, wobei der zu fördernde Bottichwagen unterschiedliche Positionen entlang der Transportstrecke einnimmt,
- Figur 6:: eine detaillierte räumliche Darstellung eines Hubwagens mit Bottich,
- Figur 7:: einen Ausschnitt eines Schnitts durch eine Hubsäule der Hubvorrichtung mit Hubwagen,
- Figur 8:: eine detaillierte räumliche Darstellung einer Bühne der Transportvorrichtung,
- Figur 9:: einen Ausschnitt einer räumlichen Darstellung der auf dem Hubwagen stehenden Bühne, sowie
- Figur 10:: einen Ausschnitt eines Schnitts durch eine Förderschiene der Fördervorrichtung.

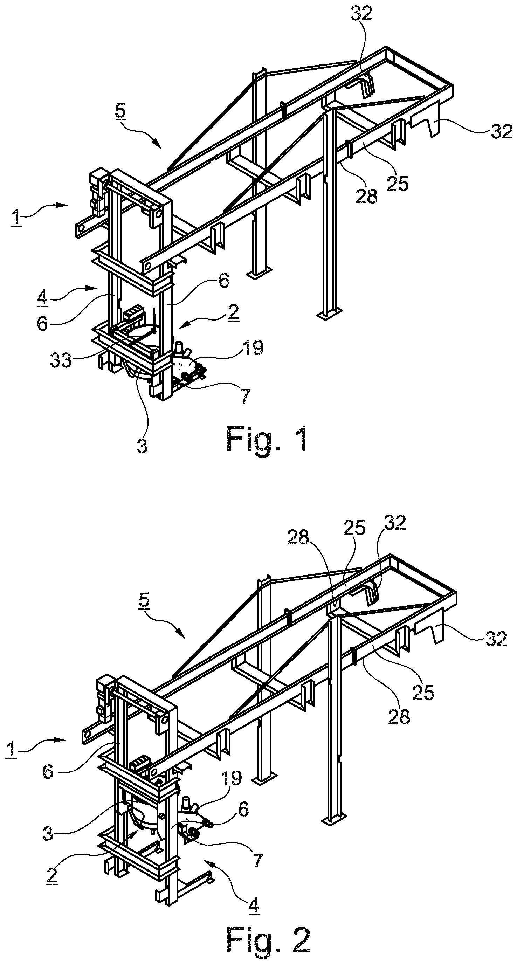

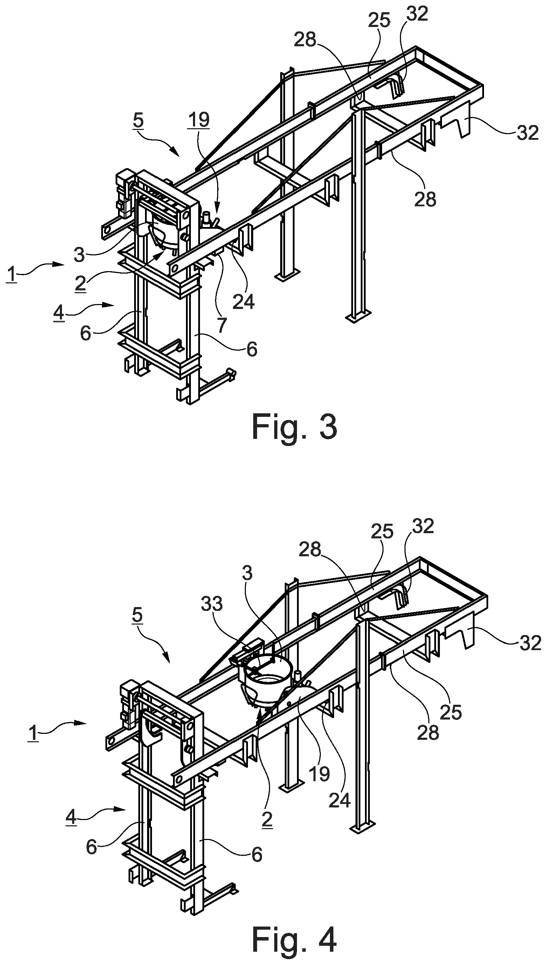

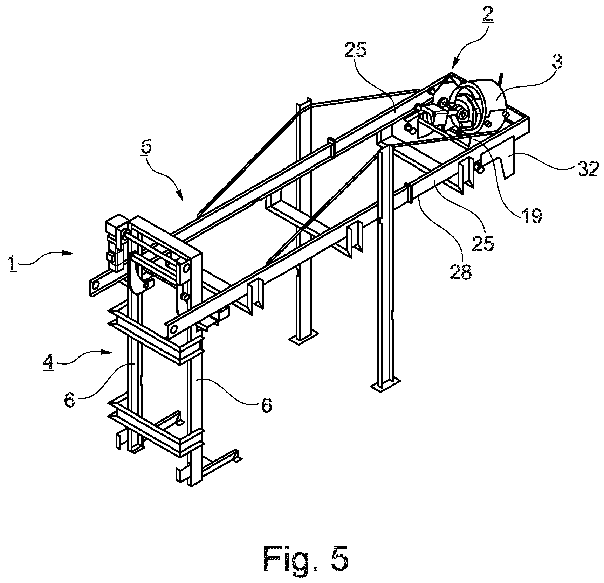

In den Figuren 1 bis 5 ist eine Transportvorrichtung 1 einer Nahrungsmittelteigverarbeitungsanlage dargestellt. Der Transportvorrichtung 1 ist im Produktionsfluss eine nicht dargestellte Teigmisch-und Knetmaschine vorgeschaltet. Diese Teigmisch-und Knetmaschine umfasst einen Bottichwagen 2, in dessen Bottich 3 der Teig durch ein motorisch angetriebenes Misch- und Knetwerkzeug geformt wird. Nach Beendigung des Knetvorganges wird der Bottichwagen 2 zu der Transportvorrichtung 1 gefahren. Die Transportvorrichtung 1 weist eine Hubvorrichtung 4 und eine Fördervorrichtung 5 auf. Der Bottichwagen 2 wird mittels der Transportvorrichtung 1 entlang einer Transportstrecke bewegt, wobei die Transportstrecke sich in eine Hubstrecke und eine Förderstrecke aufteilt und die Hubvorrichtung 4 eine Hubstrecke und die Fördervorrichtung 5 eine Förderstrecke definiert. Die Hubvorrichtung 4 bewegt den Bottichwagen 2 zwischen einer unteren Endlage und einer oberen Endlage entlang der Hubstrecke. Die obere Endlage entspricht einer vordefinierten Höhe, die insbesondere in einem Bereich zwischen 2 m und 10 m liegt. Ausgehend von der oberen Endlage bewegt die Fördervorrichtung 5 den Bottichwagen 2 von einer Startposition in eine Endposition, an der der Bottich 3 entleert wird. Die Figuren 1 bis 5 zeigen die unterschiedlichen Positionen des Bottichwagens 2 entlang der Transportstrecke. In Figur 1 befindet sich der Bottichwagen 2 in der unteren Endlage. Figur 2 zeigt einen angehobenen Zustand. In Figur 3 befindet sich der Bottichwagen 2 in der oberen Endlage und in der Startposition für die Fördervorrichtung 5. Der Bottichwagen 2 wird entlang der Horizontalen mittels der Fördervorrichtung 5 bis zu einer Endposition bewegt, wo der Bottichwagen 2 gekippt wird (siehe Figuren 4 und 5). In der beschriebenen Ausführungsform weisen die Hubvorrichtung 4 und die Fördervorrichtung 5 jeweils eine separate Antriebsvorrichtung auf. Es ist aber auch denkbar, dass beide Vorrichtungen 4,5 eine einzige gemeinsame Antriebsvorrichtung haben, die von einem einzigen Antriebsmotor angetrieben wird. Nachstehend wird detailliert die in den Figuren dargestellte Ausführungsform beschrieben.

In den folgenden Beschreibungen stehen die Richtungen oben und unten, vorne und hinten, wenn sie ohne weitere Spezifizierungen genannt sind, für oben und unten in der Hubrichtung der Hubvorrichtung 4 ausgehend vom Boden, vorne und hinten und links und rechts in der Förderrichtung 5 der Fördervorrichtung ausgehend von der Hubvorrichtung 4.

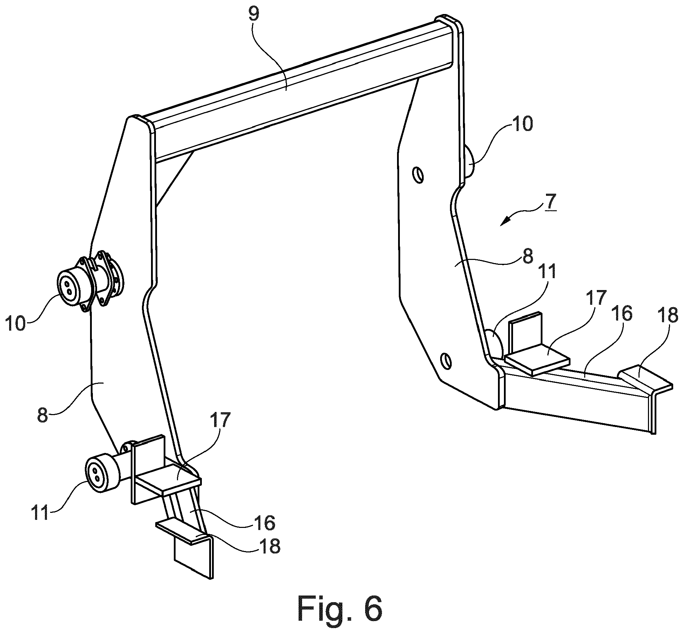

Die Hubvorrichtung 4 weist zwei Hubsäulen 6 auf, zwischen denen ein Hubwagen 7 entlang der Hubstrecke geführt ist. Der Hubwagen 7 ist im Detail in Figur 6 dargestellt. Der Hubwagen 7 weist zwei Seitenwangen 8 auf, die mittels eines Querträgers 9 miteinander verbunden sind. An den Außenseiten der beiden Seitenwangen 8 sind jeweils zwei Laufrollen 10,11 befestigt. Eine jeweils erste Laufrolle 10, die obere Laufrolle, wird fest mit einer nicht dargestellten Rollenkette verbunden, die als Zugmittel fungiert. Die Rollenketten sind endlos und angetrieben, um um ein oberes und ein unteres Kettenumlenkrad umzulaufen. Im unteren oder oberen Teil der Hubvorrichtung ist ein nicht dargestellter Antriebsmotor angeordnet, der die zwei parallellaufenden Rollenketten antreibt.

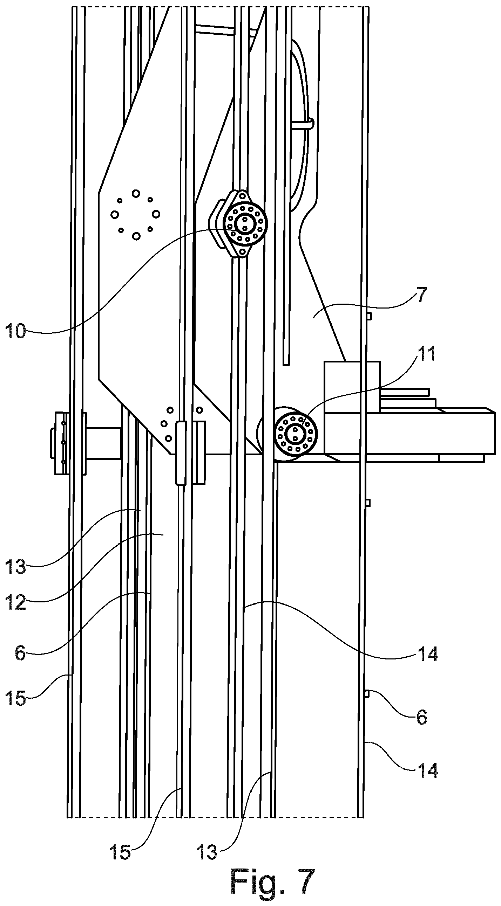

Die beiden endlosen Rollenketten verlaufen in einer lotrechten Ebene. Wie in Figur 7 dargestellt, weisen die Hubsäulen 6 ein im Querschnitt U-förmiges Profil mit einem Mittelstück 12 und an jeder Seite daran anschließenden Schenkeln 13,14 auf. Jeder Hubsäule 6 ist eine Rollenkette 15 zugeordnet, wobei die Rollenketten 15 hinter der jeweiligen Hubsäule 6 liegen. Die Kettenumlenkräder liegen jeweils auf Höhe eines Endes der jeweiligen Hubsäule 6 (nicht dargestellt). Um den Hubwagen 7 abzustützen, läuft jeweils die mit der Rollenkette 15 festverbundene erste Laufrolle 10 auf der hinteren Außenseite des hinteren Schenkels 13 der jeweiligen Hubsäule 6. Die übrige zweite Laufrolle 11 jeder Seitenwange 8 ist versetzt, nach unten und vorne, zur ersten Laufrolle 10 angeordnet und rollt auf einer Innenseite des gleichen Schenkels 13 der jeweiligen Hubsäule 6 ab. Durch diese Anordnung kann eine mittels des Hubwagens 7 zu transportierende Bühne abgestützt werden. Der Hubwagen 7 weist in einem unteren Bereich der Seitenwangen 8 jeweils einen Arm 16 auf, der sich in einer Ebene, die etwa senkrecht zu einer Längsachse der Seitenwangen 8 liegt, nach vorne erstreckt (siehe Figur 6). Auf der Oberseite des Arms 16 sind jeweils zwei Auflageflächen 17,18 angeordnet, auf denen die Bühne während der Hubbewegung aufliegt.

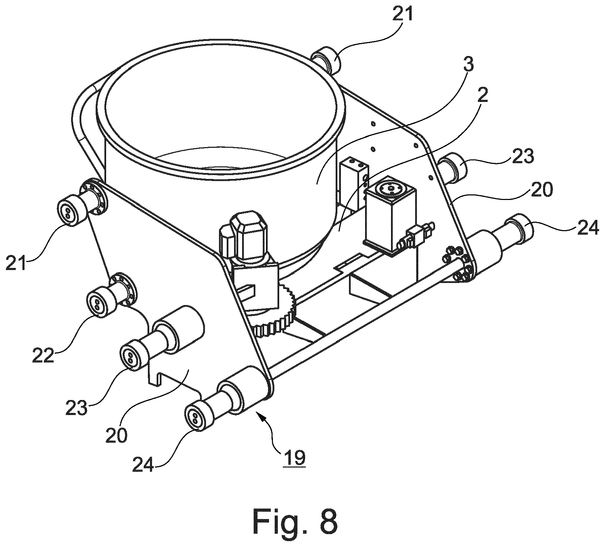

Die Bühne 19 ist im Detail in Figur 8 dargestellt. Die Bühne 19 ist zur Aufnahme des fahrbaren Bottichwagens 2 vorgesehen. An der Bühne 19 ist eine nicht dargestellte Zangenverriegelungsvorrichtung befestigt, die den Bottichwagen 2 an der Bühne 19 fixiert. Der Bottichwagen 2 weist den Bottich 3 auf, der mit einer nicht ersichtlichen Welle verbunden ist. Auf der Welle sitzt unterhalb des Bottichs 3 eine Bottichscheibe, die mit der Welle drehfest verbunden ist und die mit einem dargestellten Reibrad zum Drehen des Bottichs 3 in Wirkverbindung steht. Ein an der Bühne 19 gehaltener Elektromotor treibt über ein Getriebe, insbesondere ein Wälzkörpergetriebe, das als Reibradgetriebe oder Zahnradgetriebe ausgeformt sein kann, den Bottich 3 an, der sich um eine Rotationsachse, die mit der Längsachse des Bottichs übereinstimmt, dreht. Unterhalb der Bottichscheibe ist die Welle von einer nicht dargestellten Nabenscheibe konzentrisch umgeben, die mit einem Untergestell des Bottichwagens 2 verbunden ist. Die mit der Bühne 19 verbundene Zangenverriegelungseinrichtung greift bevorzugt an der Nabenscheibe an.

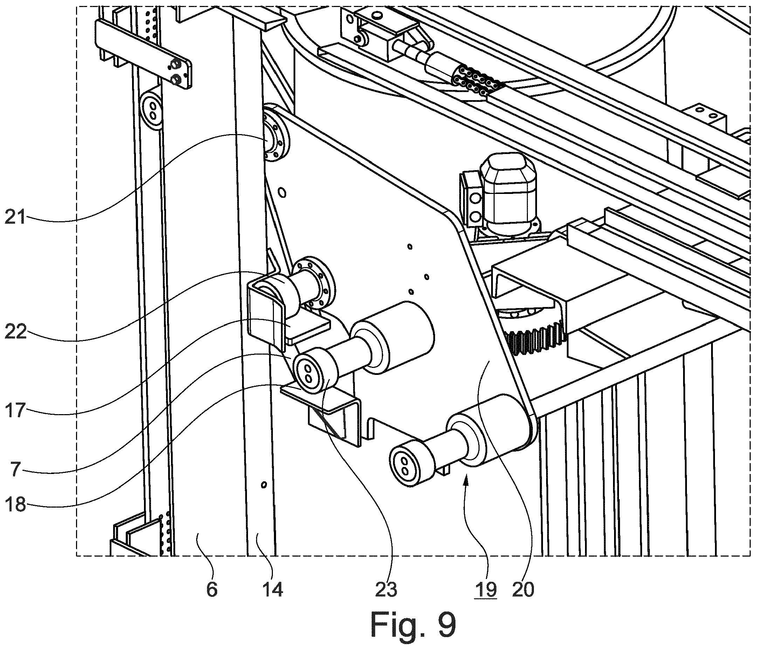

Die Bühne 19 hat einen Boden, auf dem der Bottichwagen 2 steht und zwei Seitenwangen 20, zwischen denen der Bottichwagen 2 platziert ist. An der Außenseite der jeweiligen Seitenwange 20 sind jeweils vier Laufrollen 21,22,23,24 angeordnet. Zum Anheben des Bottichwagens 2 wird dieser auf die Bühne 19 geschoben und die Zange der Zangenverriegelungseinrichtung geschlossen, um den Bottichwagen 2 auf der Bühne 19 zu fixieren. Die Bühne 19 liegt lose auf dem Hubwagen 7 auf, wie aus Figur 9 ersichtlich. Eine erste Laufrolle 21 der Bühne 19, die jeweils oben an den Seitenwangen 20 und im hinter Bereich liegt, ist zwischen den Schenkeln 14 der jeweiligen Hubsäule 6 angeordnet. Die übrigen drei Laufrollen 22,23,24 jeder Seitenwange 20 liegen vor der entsprechenden Hubsäule 6. Zwei der vor der Hubsäule 6 liegenden Laufrollen 22,23, die beiden die am nächsten zu der Hubsäule 6 angeordnet sind, liegen jeweils auf einer Auflagefläche 17,18 des jeweiligen Arms 16 des Hubwagens 7 auf. Die ersten Laufrollen 21 und die hinterste der drei vor den Hubsäulen liegenden Laufrollen 22 dienen lediglich dazu, die Lage der Bühne 19 auf dem Hubwagen 7 zu sichern.

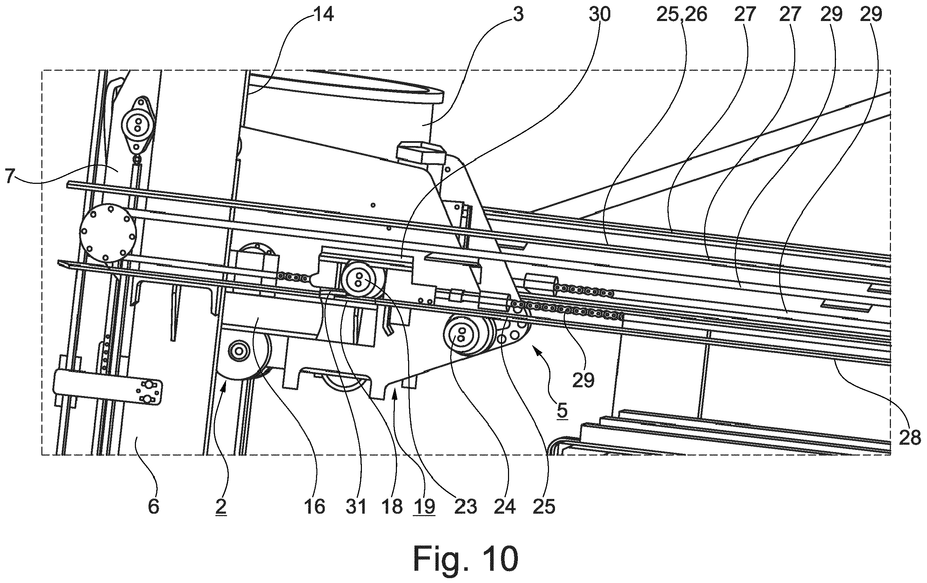

Wenn sich der Hubwagen 7 in der oberen Endlage befindet, wird die Bühne 19 von der Fördervorrichtung 5 aufgenommen und von der Hubvorrichtung 4 freigegeben. Wie aus Figur 10 ersichtlich, weist die Fördervorrichtung 5 zwei Förderschienen 25 auf, zwischen denen die Bühne 19 geführt ist. Die Förderschienen 25 haben im Querschnitt ein U-Profil mit einem Mittelstück 26 und daran seitlich anschließenden Schenkeln 27,28. Wie bei der Hubvorrichtung 4 weist die Fördervorrichtung 5 als Zugmittel bevorzugt zwei umlaufende endlose Rollenketten 29 auf, wobei jeweils eine Rollenkette 29 in einer der Förderschienen 25 läuft. Die beiden parallellaufenden Rollenketten 29 werden mittels eines Antriebsmotors angetrieben. Jede Rollenkette 29 weist einen Mitnehmer 30 auf. Der Mitnehmer 30 ist im Längsschnitt der Fördervorrichtung 5 topfförmig ausgebildet.

Beim Anheben der Bühne 19 mittels der Hubvorrichtung 4 wird jeweils das mittlere Laufrad 23 der drei vor der Hubsäule 6 liegenden Laufräder in den Mitnehmer 30 eingefahren. Dieses Laufrad 23 liegt dann innerhalb des Mitnehmers 30, wobei der Boden des topfförmigen Mitnehmers 30 das Laufrad 23 an der Oberseite überdeckt. Es besteht lediglich ein Formschluss zwischen dem mit der Rollenkette 29 verbundenen Mitnehmer 30 und dem Laufrad 23. Eine feste Verbindung ist nicht vorhanden. Damit das Laufrad 23 bis in den Mitnehmer 30 angehoben werden kann, weist die Förderschiene 25 im unteren Schenkel 28 einen Durchbruch 31 auf, so dass das Laufrad 23 beim Anheben in das Innere des Profils der Förderschiene 25 eingebracht werden kann. Die dem Laufrad 23 zugeordneten Auflageflächen 18 der beiden Arme 16 des Hubwagens 7 sind derart ausgebildet, dass der jeweilige Durchbruch 31 in der Förderschiene 29 in der oberen Endlage der Hubvorrichtung 4 zumindest teilweise geschlossen wird. So kann das darauf aufliegende mittlere Laufrad 23 beim Fördern auf der Auflagefläche 18 und der Innenseite des unteren Schenkels 28 der Förderschiene 25 abrollen. Um die Bewegung beidseitig eines jeden unteren Schenkels 28 zu führen, liegt in der oberen Endlage der Hubvorrichtung 4 jeweils das vordere Laufrad 24 der Bühne 19 auf der unteren Außenseite des Schenkels 28 der Förderschiene 25 an und rollt sich beim Fördern an dieser ab. Die Hubsäulen 6 weisen jeweils in dem vorderen Schenkel 14 einen Durchbruch 32 auf Höhe des in der oberen Endlage befindlichen oberen Laufrads der Bühne 19 auf. Die Bühne 19 wird so nach vorne, senkrecht zur Hubbewegung in der oberen Endlage freigegeben. Beim Antreiben der parallellaufenden Rollenketten der Fördervorrichtung 5 bewegt sich die Bühne 19 mit dem Bottichwagen 2 linear in horizontaler Ebene. Am Ende der Förderstrecke wird der Bottichwagen 2 mit dem Bottich 3 gekippt, um den Nahrungsmittelteig aus dem Bottich 3 auszutragen. Es ist eine mechanische Kippung vorgesehen. Wie in den Figuren 1-5 dargestellt, ist dazu am Ende der Förderstrecke an der Förderschiene 25, unterhalb des unteren Schenkels 28 angrenzend, eine mechanische Kippkurve 32 angeordnet, in die jeweils die vordere Laufrolle 24 der Bühne 19 eingreift und mittels der die vordere Laufrolle 24 geführt wird. Die Kippkurve 32 ist derart ausgebildet, dass die gesamte Bühne 19 mit dem Bottichwagen 2 um die in dem Mitnehmer befindliche Laufrolle gekippt wird. In anderen Worten, die in dem Mittnehmer befindliche Laufrolle bildet die Schwenkachse aus. Während des Kippvorgangs und/oder im gekippten Zustand wird der Bottich 3 bevorzugt gedreht, um den Austrag zu verbessern. Der Bottich 3 wird bevorzugt um einen Winkel gekippt, der in einem Bereich von 105° bis 135° liegt. Zudem kann eine Ausschälvorrichtung 33 vorgesehen sein, die mit der Bühne 19 festverbunden ist und mit der der Bottich 3 falls notwendig restentleert und gesäubert werden kann.

Nachdem der Bottich 3 entleert wurde, wird die Bühne 19 mit dem Bottichwagen 2 mittels der Rollenketten zurück zur Hubvorrichtung 4 bewegt und auf dieser auf den Auflageflächen der Arme platziert. Danach wird die Bühne 19 mit dem Hubwagen 7 aus der oberen Endlage in die untere Endlage verfahren und der Bottichwagen kann aus der Transportvorrichtung entnommen werden.

Je nach Einsatz und Kundenwunsch kann die Hubvorrichtung auch eine geneigte Hubstrecke zur Vertikalen ausbilden. Die Neigung gegenüber der Vertikalen ist bevorzugt kleiner als 10°. In den meisten Fällen ist eine sich vertikal erstreckende Hubstrecke bevorzugt. Die Förderstrecke ist bevorzugt horizontal ausgerichtet. Es ist aber auch denkbar, dass die Förderstrecke zur Horizontalen um vorzugsweise kleiner als 10° geneigt ist. Die geneigte Förderstrecke kann dabei von der Hubstrecke ausgehend ansteigend oder abfallend ausgebildet sein, je nach Kundenanforderungen. Vorzugsweise ist die Förderstrecke linear. Es ist aber auch denkbar, dass die Förderstrecke wenigstens eine Kurve aufweist.

Vorzugsweise weist die Transportvorrichtung offene Zugmittel, insbesondere Rollenketten auf, die einfach von einer Plattform aus zu reinigen sind. Unterhalb der Förderstrecke kann eine Abdeckung vorgesehen sein. Dies ist insbesondere notwendig, wenn unterhalb der Fördervorrichtung andere nahrungsmittelverarbeitende Vorrichtungen oder Transportstrecken platziert sind. Die Abdeckung kann eine flexible Plane oder ein Abdeckblech oder dergleichen sein, die verhindert, dass Schmiermittel oder Abrieb der Fördervorrichtung nach unten tropft bzw. fällt und den darunter befindlichen Nahrungsmittelteig verunreinigt.

Es ist denkbar andere Zugmittel, wie beispielswiese Seile oder Riemen einzusetzen. Auch möglich ist es, die Zugmitteltriebe durch Elektromotoren zu ersetzen, die unmittelbar als angetriebene Förderrollen die mit den Zugmitteln verbundenen Laufrollen ersetzen. Die Kippbewegung zum Entleeren des Bottichs kann ebenfalls mittels eines Elektromotors ausgeführt werden, so dass auf eine mechanische starre Kippung verzichtet werden kann. Dabei würde sich der Vorteil ergeben, dass eine Kippung an jeder Position entlang der Förderstrecke (an wenigstens einer Zwischenposition) vollzogen werden kann und dies nicht auf die Endposition begrenzt ist.

## Patentansprüche

1. Transportvorrichtung (1) zum Transport von Nahrungsmittelteig in einem Bottich (3) eines Bottichwagens (2) aufweisend
- eine Hubvorrichtung (4), die dazu eingerichtet ist, den Bottichwagen (2) entlang einer Hubstrecke zwischen einer unteren Endlage und einer oberen Endlage zu transportieren,
- eine Fördervorrichtung (5), die dazu eingerichtet ist, den Bottichwagen (2) entlang einer Förderstrecke zwischen der oberen Endlage und einer Endposition zu transportieren,
- wenigstens eine Antriebsvorrichtung, die zum Antreiben der Hubvorrichtung (4) und/oder Fördervorrichtung (5) ausgebildet ist,
- eine Kippvorrichtung (32), die dazu ausgebildet ist, den Bottich (3) mit dem Bottichwagen (2) an wenigstens einer Position entlang der Förderstrecke zum Austrag des Nahrungsmittelteigs aus dem Bottich (3) gegenüber der Horizontalen um mehr als 100° zu verkippen.

2. Transportvorrichtung nach Anspruch 1, **dadurch gekennzeichnet, dass** die Transportvorrichtung eine Abdeckung umfasst, die unterhalb der Förderstrecke angeordnet ist und die dazu eingerichtet ist, einen Raum unterhalb der Fördervorrichtung (5) vor Verschmutzung durch die Fördervorrichtung (5) zu schützen.

3. Transportvorrichtung nach Anspruch 1 oder 2, **dadurch gekennzeichnet, dass** der Bottich (3) zur Drehung um eine Rotationsachse antreibbar ist.

4. Transportvorrichtung nach einem der vorhergehenden Ansprüche,
**dadurch gekennzeichnet, dass** eine Ausschälvorrichtung (33) mit dem Bottichwagen (2) entlang der Hubstrecke und der Förderstrecke bewegbar ist, die dazu ausgebildet ist, den Bottich (3) restzuentleeren.

5. Transportvorrichtung nach einem der vorhergehenden Ansprüche,
**dadurch gekennzeichnet, dass** die Hubvorrichtung (4) eine erste Antriebsvorrichtung aufweist und die Fördervorrichtung (5) eine zweite Antriebsvorrichtung aufweist, die separat zur ersten Antriebsvorrichtung ausgebildet ist und dass jede Antriebsvorrichtung einen eigenen Antriebsmotor aufweist.

6. Transportvorrichtung nach Anspruch 4, **dadurch gekennzeichnet, dass** die erste und zweite Antriebsvorrichtung jeweils einen Kettentrieb mit zwei parallelangeordneten umlaufenden endlos Rollenketten (15,29) umfasst.

7. Transportvorrichtung nach Anspruch 4 oder 5, **dadurch gekennzeichnet, dass** die Hubvorrichtung (4) zwei Hubsäulen (6) und zwischen den Hubsäulen (6) einen geführten Hubwagen (7) aufweist, wobei der Hubwagen (7) dazu ausgebildet ist eine Bühne (19) zu transportieren, die lose auf dem Hubwagen (7) aufliegt, wobei die Bühne (19) eine Befestigungsvorrichtung aufweist, die dazu ausgebildet ist, den Bottichwagen (2) auf der Bühne (19) zu fixieren, und wobei der Hubwagen (7) ausschließlich zwischen der unteren Endlage und der oberen Endlage verfahrbar ist und der Bottichwagen (2) dazu ausgebildet ist, mittels der Fördervorrichtung (5) entlang der Förderstrecke zu verfahren.

8. Transportvorrichtung nach Anspruch 6, **dadurch gekennzeichnet, dass** der Hubwagen (7) Seitenwangen (8) aufweist, an dessen Außenseite jeweils eine fest mit der Rollenkette (15) der Hubvorrichtung (4) verbundene Laufrolle (10) befestigt ist, die jeweils an einer Hubsäule (6) abrollt, und dass die Bühne (19) einen Boden und daran anschließende Seitenwangen (20) aufweist, an dessen Außenseite jeweils eine Laufrolle (23) befestigt ist, die dazu ausgebildet ist, von einem mit der entsprechenden Rollenkette (29) der Fördervorrichtung (5) verbunden Mitnehmer (30) durch Formschluss erfasst zu werden.

9. Transportvorrichtung nach einem der vorhergehenden Ansprüche,
**dadurch gekennzeichnet, dass** die Kippvorrichtung (32) eine mechanische Kippkurve ist, die am Ende der Förderstrecke angeordnet ist.

10. Transportvorrichtung nach einem der vorhergehenden Ansprüche 6 bis 8, **dadurch gekennzeichnet, dass** die Ausschälvorrichtung (33) an der Bühne (19) befestigt ist.

11. Transportvorrichtung nach einem der vorhergehenden Ansprüche 6 bis 9, **dadurch gekennzeichnet, dass** die Bühne (19) einen Elektromotor zum rotatorischen Antreiben des Bottichs (3) aufweist.

12. Verwendung der Transportvorrichtung (1) nach einem der vorhergehenden Ansprüche zum Transport von Nahrungsmittelteig von einer Teigmisch- und Knetmaschine zu einer Eingangsstation einer Teigverarbeitungsanlage oder Teigverarbeitungsstation.

13. Verfahren zum Transport von Nahrungsmittelteig mittels einer Transportvorrichtung (1) aufweisend eine Hubvorrichtung (4) und eine Fördervorrichtung (5), wobei das Verfahren folgende aufeinanderfolgende Schritte aufweist:
a) Fahren eines Bottichwagens (2) in die Hubvorrichtung (4),
b) Transportieren des Bottichwagens (2) mittels der Hubvorrichtung (4) von einer unteren Endlage in eine obere Endlage,
c) Transportieren des Bottichwagens (2) mittels der Fördervorrichtung (5) von der oberen Endlage in eine Zwischenposition oder Endposition,
d) Verkippen des Bottichwagens (2) gegenüber der Horizontalen um mehr als 100° und dadurch Austragen des Nahrungsmittelteigs aus einem Bottich (3) des Bottichwagens (4).

14. Verfahren nach Anspruch 12, **dadurch gekennzeichnet, dass** im Verfahrensschritt d) der Bottich (3) zum Austragen des Nahrungsmittelteiges gedreht wird.

15. Verfahren nach Anspruch 12 oder 13, **dadurch gekennzeichnet, dass** die Hubvorrichtung (4) eine erste Antriebsvorrichtung aufweist und die Fördervorrichtung (5) eine zweite Antriebsvorrichtung aufweist, die separat zur ersten Antriebsvorrichtung ausgebildet ist und dass jede Antriebsvorrichtung einen eigenen Antriebsmotor aufweist und zwischen den Verfahrensschritten b) und c) der Bottichwagen (2) von der Hubvorrichtung (4) freigegeben wird und in Formschluss mit der Fördervorrichtung (5) gebracht wird.

16. Verfahren nach Anspruch 14, **dadurch gekennzeichnet, dass** die erste und zweite Antriebsvorrichtung jeweils ein Kettentrieb mit zwei parallelangeordneten umlaufenden endlos Rollenketten (15,29) ist und die Transportvorrichtung (1) einen Hubwagen (7), der zwischen zwei Hubsäulen (6) geführt ist, und eine Bühne (19) aufweist, wobei im Verfahrensschritt b) die Bühne (19) lose auf dem Hubwagen (7) aufliegt und auf der Bühne (19) der Bottichwagen (2) steht und mit dem Hubwagen (7) die Bühne (19) und der Bottichwagen (2) verfahren werden und im Verfahrensschritt c) die Bühne (19) mit dem Bottichwagen (2) transportiert wird und der Hubwagen (7) zwischen den Hubsäulen (6) verbleibt.

17. Verfahren nach Anspruch 15, **dadurch gekennzeichnet, dass** die Bühne (19) einen Boden und daran anschließende Seitenwangen (20) aufweist, an dessen Außenseite jeweils wenigstens eine Laufrolle (23) befestigt ist, und in Verfahrensschritt b) die Bühne (19) in die obere Endlage gebracht wird und dabei eine Laufrolle (23) in einen Mitnehmer (30) eingreift, der mit der entsprechenden Rollenkette (29) verbunden ist, so dass im Verfahrensschritt c) mittels des Mitnehmers (30) die Bühne (19) von dem Hubwagen (7) runterbewegt und zur Zwischenposition oder Endposition transportiert wird.

18. Verfahren zur Herstellung von Nahrungsmittelteig mit den folgenden aufeinanderfolgenden Verfahrensschritten:
• Kneten eines Nahrungsmittelteiges in einem Bottich (3) eines Bottichwagens (2) mittels einer Knetmaschine,
• Nach Beendigung des Knetvorgangs Herausfahren eines Knetwerkzeugs der Knetmaschine aus dem Bottich (3) und Entnahme des Bottichwagens (2) aus der Knetmaschine,
• Verfahren des Bottichwagens (2) zu einer Transportvorrichtung (1) und Ausführen des Verfahrens nach einem der vorhergehenden Ansprüche 12 bis 16.
